# DEMANDE DE BREVET EUROPEEN

(11) **EP 1 901 452 A1**
(43) Date de publication de la demande: **19.03.2008**
(21) Numéro de dépôt: 06291450.2
(22) Date de dépôt: 13.09.2006
(51) Int. Cl.: H04H 1/00

(54) **Méthode de transmission d'informations de services dans différents types de réseaux de diffusion**

(71) Demandeur: Nagravision S.A., 1033 Cheseaux-sur-Lausanne (CH)
(72) Inventeur: Burckhard, Antoine, 78180 Montigny le Bretonneux (FR)
(74) Mandataire: Leman Consulting S.A.

(57) **Abrégé**

La présente invention concerne une méthode de transmission d'informations de service dans un réseau de diffusion par au moins un centre de gestion (CG1 ... CGn) à destination d'une pluralité de récepteurs (STB1, STBn) connectés d'une part à un réseau de diffusion de flux de données numériques du type DVB et d'autre part à un réseau de diffusion du type IP. Ces flux comprennent des données de contenu des services et des données additionnelles d'information les services structurées dans des tables adaptées au protocole de transmission propre à chaque type de réseau. La méthode est caractérisée en ce qu'elle comprend les étapes suivantes:
- explorer les flux diffusés par chaque type de réseau et extraire les informations de services des dits flux,
- compléter une table d'information comprise dans les informations de services DVB-SI transmises par le réseau DVB par des informations de service se rapportant au réseau IP,
- transmettre la table d'information complétée dans les flux diffusés par le réseau DVB à destination des récepteurs

## Description

### Domaine de l'invention

La présente invention concerne le domaine de la diffusion, dans un réseau, de flux de données numériques comprenant des services et des données d'informations, à destination d'une pluralité de récepteurs. Plus particulièrement, elle concerne la transmission et la réception de données d'information sur des services fournis par divers type de réseaux de diffusion. Ces informations renseignent un utilisateur sur l'accès et sur les caractéristiques des services disponibles à partir de récepteurs équipés d'interfaces appropriés.

### Arrière plan de l'invention

La norme DVB (Digital Video Broadcasting) définit un service comme un ensemble de données numériques géré par un opérateur et diffusé dans un flux de transport par voie hertzienne terrestre ou via satellite ou par un câble à destination d'une pluralité de récepteurs / décodeurs. Ces données correspondent généralement à des programmes de télévision, de radio, des informations spécifiques (promotions commerciales, bourse, météo, spectacles, etc.) ou à toute autre application multimédia exploitable en ligne ou après téléchargement sur un support adéquat.

Le flux de transport contient les données d'un service consistant par exemple en un contenu audio/vidéo accompagné de données additionnelles comme des sous-titres, du télétexte ou des applications interactives et des informations sur le service comme le descriptif du contenu, l'horaire de diffusion, les conditions d'accès etc.

Le document EP1464176 décrit une méthode permettant l'utilisation des données fournies par la table d'information sur les événements (DVB-SI Event Information Table) pour accéder à un flux diffusé en mode IP. Un événement proposé est associé à au moins deux sources et le système permet un accès transparent à cet événement quelle que soit sa source. Un récepteur adéquat comprend des moyens d'information sur les services permettant l'utilisation des données d'information d'événements pour accéder aux contenus diffusés selon le protocole IP. Ces moyens d'information utilisent des protocoles d'annonce et de description de services pour relier les canaux de services mis à disposition par le fournisseur de contenus numérique et les services de diffusion des flux IP.

Le document FR2864869 divulgue un système de diffusion de services DVB via un réseau IP dans lequel les informations de signalisation décrivant le réseau et les services offerts sont séparées des services eux-mêmes. Un récepteur connecté à un réseau bidirectionnel détecte des services en se connectant d'abord à un premier flux pour en extraire des informations de localisation sur le réseau. Elles comprennent d'une part des données sur les flux transportant le contenu de ces services et d'autre part des données sur les flux séparés transportant des informations sur ces services. Lors d'une étape finale, le récepteur utilise ces informations pour établir une liste de services disponibles sur le réseau.

Dans les systèmes de ces deux documents, le récepteur se charge de l'exploration des services disponibles sur le réseau et extrait des différentes tables les informations nécessaires pour établir une liste de programmes. Cette liste est stockée dans le récepteur et mise à disposition d'un guide électronique de programmes EPG (Electronic Program Guide) s'affichant sur un écran et fonctionnant comme interface entre l'utilisateur et le récepteur.

Dans certaines configurations, le récepteur ou décodeur aussi appelé set-top-box est connecté d'une part à un câble ou une antenne et d'autre part à un réseau IP bidirectionnel pour recevoir des flux de services DVB. Ces deux réseaux de diffusion, comprenant chacun leurs propres paramètres, entraînent un traitement spécifique des informations de services de la part du récepteur. Ce traitement local peut constituer une surcharge du récepteur surtout lorsque le nombre, la diversité des services proposés ainsi que la complexité de leur paramètres deviennent importants.

### Description sommaire de l'invention

Le but de la présente invention est d'une part simplifier le traitement des données d'information de services par le récepteur et d'autre part assurer une retransmission transparente de ces informations sur un réseau DVB sans exploration préalable des services disponibles sur le réseau IP par le récepteur.

Ce but est atteint par une méthode de transmission d'informations de service dans un réseau de diffusion par au moins un centre de gestion à destination d'une pluralité de récepteurs connectés d'une part à un réseau de diffusion de flux de données numériques du type DVB et d'autre part à un réseau de diffusion du type IP, les dits flux comprenant des données de contenu des services et des données additionnelles d'information sur les dits services structurées dans des tables adaptées au protocole de transmission propre à chaque type de réseau, ladite méthode est caractérisée en ce qu'elle comprend les étapes suivantes:
- explorer les flux diffusés par chaque type de réseau et extraire les informations de services des dits flux,
- compléter une table d'information comprise dans les informations de services DVB-SI transmises par le réseau DVB par des informations de service se rapportant au réseau IP,
- transmettre la table d'information complétée dans les flux diffusés par le réseau

DVB à destination des récepteurs.

La méthode de l'invention permet de grouper dans une table transmise par le réseau DVB toutes les informations sur les services disponibles quelle que soit leur source. Le récepteur peut ainsi afficher ces informations par le seul traitement du flux diffusé par le réseau DVB sans devoir traiter les informations des services diffusés sur le réseau IP. L'analyse des différents flux IP et le traitement de des données d'information de services par le centre de gestion décharge ainsi le récepteur de tâches souvent considérables.

Parmi toutes les tables incluses dans les données d'information de services, on utilise de préférence la table NIT ou table d'information réseau NIT (Network Information Table).

En cas de problèmes de réception sur le réseau DVB, les informations affichées renseignent l'utilisateur sur la disponibilité de services équivalents sur le réseau IP. Le cas échéant, le récepteur peut être commuté sur le réseau IP automatiquement selon une programmation de l'interface utilisateur ou manuellement.

Les données d'information de services sont généralement extraites d'une structure appelée SD&S (Service Discovery & Selection) transmise par le réseau IP. Elles contiennent essentiellement les adresses IP et les descripteurs des services. Selon une configuration, elles peuvent également inclure les références des diffuseurs IP.

La table NIT regroupe l'ensemble des données de services rendu accessible à un utilisateur par un opérateur. Dans un exemple de transmission par voie hertzienne, cette table contient des informations nécessaires aux réglages du récepteur pour capter un flux DVB telles que la fréquence, la polarisation, des paramètres de correction d'erreurs, les débits des flux de données etc.

Selon une variante, la table NIT peut être complétée avec les informations des réseaux IP reçues par d'autres voies que la structure SD&S, notamment par des fichiers, des bases de données ou encore par une saisie manuelle.

### Brève description de la figure

L'invention sera mieux comprise grâce à la description détaillée qui va suivre et qui se réfère à la figure annexée donnée à titre d'exemples nullement limitatif.

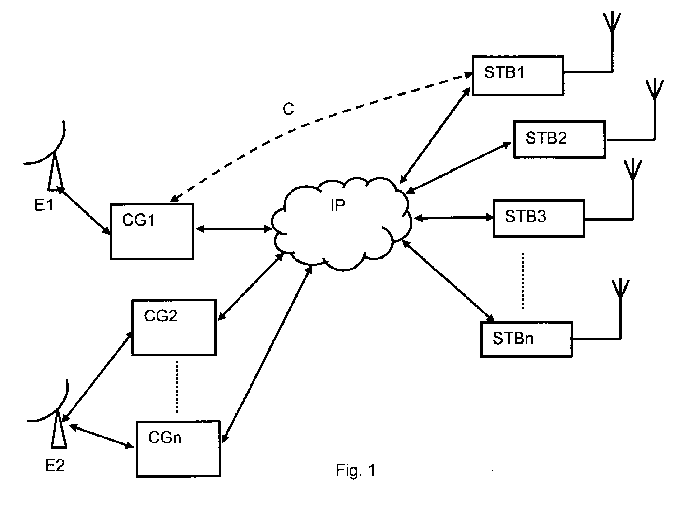

La figure 1 illustre un ensemble de récepteurs connectés à un réseau IP et à un réseau de diffusion dans lesquels la distribution des flux numériques est organisée par des centres de gestion.

### Description détaillée de l'invention.

Le schéma bloc de la figure 1 montre une pluralité de récepteurs ou set top box (STB1...STBn) recevant des données numériques à partir d'un réseau de diffusion DVB et connectés à un réseau IP. Les centres de gestion (CG1,..., CGn) dépendant des opérateurs sont chargés de l'organisation des flux et de leur diffusion sur les réseaux. Dans l'exemple, les flux sont transmis aux récepteurs par voie hertzienne par des émetteurs (E1, E2) ou par câble (C) sous le contrôle des centres de gestion (CG1...CGn). La méthode de l'invention est par conséquent mise en oeuvre au niveau des centres de gestion (CG1,...CGn) qui fournissent les services ainsi que les informations les concernant qui sont régies par des normes définies par l'ETSI (European Telecomunication Standard Institute).

Le document EN 300 468 intitulé Digital Video Broadcasting (DVB); Specification for Service Information (SI) in DVB Systems publié par l'ETSI décrit la structure des informations de services SI et la norme ISO/IEC 13818-1 MPEG-2 "Information technology - Generic coding of moving pictures and associated audio information: Systems" définit les information spécifiques de programmes PSI (Program Specific Information).

Les données PSI permettent de configurer le récepteur de manière automatique pour démultiplexer et décoder les différents flux de programmes qu'il reçoit.

Ces données PSI sont structurées en quatre types de tables qui sont transmises par sections, à savoir.
1) La table d'association de programmes (PAT) Program Association Table:
   Elle indique pour chaque service du multiplex la localisation c'est-à-dire les valeurs des identificateurs de paquets PID (Packet Identifier) des paquets du flux de transport de la table d'organisation des programmes PMT (Program Map Table) correspondante. Elle fournit également la localisation de la table d'information réseau NIT (Network Information Table).
2) La table d'accès conditionnel CAT (Conditional Access Table)
   Elle fournit des informations propres aux systèmes d'accès conditionnel utilisés dans le multiplex comprenant la localisation du flux de messages d'administration EMM (Entitlement Management Message).
3) La table d'organisation des programmes PMT (Program Map Table)
   Elle identifie et indique les localisations des flux constituant chaque service et la localisation des champs de référence d'horloge de programme pour un service.
4) La table d'information réseau NIT (Network Information Table)
   Sa localisation est définie selon la norme ISO/IEC 13818-1 MPEG-2, le format des données n'étant pas compris dans cette norme. Elle fournit des informations sur le réseau physique permettant de retrouver d'autres flux de transport sur le réseau.

Les informations spécifiques de programmes PSI sont complétées par des données permettant à l'utilisateur d'identifier les services et les événements transportés dans un multiplex ou dans un réseau. Ces données sont réparties dans des tables telles que:
- La table d'association de bouquets BAT (Bouquet Association Table) fournissant outre le nom du bouquet (ensemble de programmes ou de services mis à disposition d'utilisateurs par un opérateur), la liste des services disponibles dans chaque bouquet.
- La table de description de service SDT (Service Description Table) contenant des données décrivant les services comme les noms et les fournisseurs des services.

Les tables BAT ou SDT peuvent aussi être complétées par des informations de services supplémentaires se rapportant à la diffusion sur les réseaux IP au même titre que la table NIT. Cette opération est effectuée, lorsque la table NIT ne peut pas être modifiée à cause de restrictions imposées par les distributeurs de services.

Le document ETSI TS 102 034 intitulé Digital Video Broadcasting (DVB); Transport of MPEG-2 Based DVB Services over IP Based Networks spécifie le déploiement de services multimédia MPEG-2 DVB sur des réseaux IP bidirectionnels. Ces réseaux IP permettent la diffusion de flux de données importants grâce à l'avènement de la technologie DSL (Digital Subscriber Line) qui leur procure une grande largeur de bande et un débit de données élevé.

Les tables d'information réseau NIT (Network Information Table) se sont pas utilisées dans les réseaux IP, les informations nécessaires sont transmises dans une structure SD&S (Service Discovery & Selection). Cette structure fournit les informations sur les services offerts et sur la manière d'accéder à ces services à l'aide d'adresses IP. Elle s'apparente à celle des informations de service SI des réseaux DVB traditionnels dont certaines informations peuvent être transférées vers la structure SD&S appropriée.

Les informations SD&S peuvent être délivrées selon un modèle "push" multipoint supportant la diffusion de contenu en direct ou "pull" point à point pour la diffusion de contenus à la demande (VOD). Deux types de structures sont définis pour la diffusion en direct:
1). "TS Full SI" (Transport Stream full Service Information). Ce mode permet la retransmission transparente de flux de transport provenant d'autre réseaux de distribution (satellite, câble...) comprenant toutes les tables SI sans modifications. Comme la table NIT est remplacée par les structures SD&S dans les réseaux DVB-IP, elle est ignorée par le récepteur et le fournisseur de services DVB-IP doit générer des informations de découverte de services additionnelles.
2). "TS Optional SI" (Transport Stream Optional Service Information). Dans ce mode, la retransmission de tables SI est optionnelle et il est supposé que le fournisseur de services DVB-IP dispose d'autres mécanismes pour transmettre les informations de service appropriées. Lorsque les tables SI sont présentes, les informations SD&S sont prioritaires.

En résumé, la plupart des informations SI des réseaux DVB sont retransmises soit de manière transparente, soit transférées dans des structures SD&S avant la transmission dans des réseaux IP.

Pour la diffusion via les réseaux DVB, la table NIT ou d'autres tables groupant des données SI peuvent être modifiées par l'ajout des informations réseaux IP issues d'autres sources comme des fichiers ou de bases de données sans devoir les extraire des structures SD&S.

Une table NIT contient des informations sur l'organisation physique des flux multiplexés transportés par un réseau donné et sur le réseau lui-même. La combinaison d'un identificateur de réseau avec un identificateur du flux de transport permet d'identifier de manière unique chaque flux transmis. Les réseaux sont désignés par des identificateurs ou codes les définissant de manière unique selon le document ETSI ETR 162 "Allocation of Service Information (SI) codes for Digital Video Broadcasting (DVB) systems". Le récepteur stocke les informations de la table NIT dans une mémoire non-volatile afin de raccourcir le temps d'accès lors de la commutation d'un canal vers un autre (zapping). Une table NIT peut être transmise à d'autres réseaux que le réseau courant et elle se différencie par un identificateur de table.

Les normes ETSI définissent l'organisation des flux de données transmis avec les informations nécessaires à la réception des services transportés par ces flux en fonction de la configuration des récepteurs. Elles laissent cependant quelques libertés quant au contenu des tables, notamment les descripteurs de services qui peuvent être adaptés aux caractéristiques des réseaux auxquels sont connectés les récepteurs. Ainsi, le fait de compléter selon la méthode de l'invention une table NIT ou d'autres tables appartenant aux informations de services SI n'est pas contre-indiqué par les normes pourvu que les informations introduites respectent le format et la syntaxe prescrits.

Du fait que les informations de services DVB-SI sont transmises par sections identifiées par les identificateurs de paquets PID, la table NIT peut être divisée en plusieurs sous-tables, par exemple une par diffuseur de services IP. Le récepteur se charge alors de reconstituer une table complète lors du stockage dans la mémoire non-volatile.

La présente invention a également pour objet une méthode de réception et de traitement de flux de données numériques de services par un récepteur comprenant un premier moyen de réception de flux de données numériques du type DVB, un second moyen de réception de flux de données numériques du type IP et des moyens de traitement et d'affichage de données d'information sur les services diffusés, ladite méthode est caractérisée en ce qu'elle comprend les étapes suivantes:
- réception d'au moins une table d'information de services par le premier moyen de réception,
- traitement de la table reçue et affichage d'informations sur les services diffusés par les flux de données numériques du type DVB et les flux de données numériques du type IP.
- en cas de réception défectueuse d'un service à partir du premier moyen de réception, afficher des informations sur un ou des services équivalents recevables à partir du second moyen de réception,
- commuter le récepteur sur le second moyen de réception apte à recevoir le ou les services équivalents.

La table reçue par le premier moyen de réception, c'est-à-dire via le réseau du type DVB, contient les informations sur les services diffusés par le réseau IP. Cette table est complétée par le centre de gestion, selon la méthode décrite plus haut, avec les adresses IP accompagnant les descripteurs des services et accessoirement les références des diffuseurs IP.

En cas de mauvaise réception d'un service à partir du réseau du type DVB, le récepteur est commuté soit automatiquement, soit manuellement par l'utilisateur selon les informations affichées, sur le second moyen de réception, c'est-à-dire via le réseau IP, afin de recevoir un ou des services équivalents au service défectueux.

## Revendications

1. Méthode de transmission d'informations de service dans un réseau de diffusion par au moins un centre de gestion (CG1...CGn) à destination d'une pluralité de récepteurs (STB1, STBn) connectés d'une part à un réseau de diffusion de flux de données numériques du type DVB et d'autre part à un réseau de diffusion du type IP, les dits flux comprenant des données de contenu des services et des données additionnelles d'information sur les dits services structurées dans des tables adaptées au protocole de transmission propre à chaque type de réseau, ladite méthode est **caractérisée en ce qu'**elle comprend les étapes suivantes:
- explorer les flux diffusés par chaque type de réseau et extraire les informations de services des dits flux,
- compléter une table d'information comprise dans les informations de services DVB-SI transmises par le réseau DVB par des informations de service se rapportant au réseau IP,
- transmettre la table d'information complétée dans les flux diffusés par le réseau DVB à destination des récepteurs.

2. Méthode selon la revendication 1, **caractérisée en ce que** la table d'information complétée consiste en la table d'information réseau NIT définie selon la norme ETSI EN 300 468.

3. Méthode selon la revendication 1, **caractérisée en ce que** la table d'information complétée consiste en la table d'association de bouquets BAT ou de description de service SDT définie selon la norme ETSI EN 300 468.

4. Méthode selon les revendications 1 à 3, **caractérisée en ce que** la table d'information est complétée par au moins un descripteur comprenant un identificateur d'un service et une adresse IP correspondant audit service.

5. Méthode selon les revendications 1 à 4, **caractérisée en ce que** la table d'information est complétée par une référence du diffuseur du service IP.

6. Méthode selon la revendication 1, **caractérisée en ce que** la table d'information complétée est transmise sous forme divisée en plusieurs sous-tables attribuées chacune à un diffuseur de service IP.

7. Méthode selon la revendication 1, **caractérisée en ce que** la table d'information est complétée par les informations de service extraites de la structure SD&S (Service Discovery & Sélection) transmise par le réseau IP.

8. Méthode selon la revendication 1, **caractérisée en ce que** les informations de services se rapportant au réseau IP sont introduites dans la table d'information à partir de fichiers ou de bases de données.

9. Méthode de réception et de traitement de flux de données numériques de services par un récepteur comprenant un premier moyen de réception de flux de données numériques du type DVB, un second moyen de réception de flux de données numériques du type IP et des moyens de traitement et d'affichage de données d'information sur les services diffusés, ladite méthode est **caractérisée en ce qu'**elle comprend les étapes suivantes:
- réception d'au moins une table d'information de services par le premier moyen de réception,
- traitement de la table reçue et affichage d'informations sur les services diffusés par les flux de données numériques du type DVB et les flux de données numériques du type IP,
- en cas de réception défectueuse d'un service à partir du premier moyen de réception, afficher des informations sur un ou des services équivalents recevables à partir du second moyen de réception,
- commuter le récepteur sur le second moyen de réception apte à recevoir le ou les services équivalents.
